# EUROPEAN PATENT SPECIFICATION

(11) **EP 2 069 595 B1**
(45) Date of publication and mention of the grant of the patent: **23.05.2012**
(21) Application number: 07836335.5
(22) Date of filing: 30.07.2007
(51) Int. Cl.: E05B 67/00, E05B 37/00, B62H 5/00, B62J 11/00

(54) **ADJUSTABLE BICYCLE LOCK MOUNTING ARRANGEMENT**
EINSTELLBARE MONTAGEANORDNUNG FÜR EIN FAHRRADSCHLOSS
AGENCEMENT DE MONTAGE DE VERROU DE BICYCLETTE AJUSTABLE

(30) Priority: 31.07.2006 US 497186
(43) Date of publication of application: 17.06.2009
(73) Proprietor: INGERSOLL-RAND COMPANY, Montvale, NJ 07645 (US)
(72) Inventor: MCDAID, Comelius, Randolph, MA 02368 (US); THAMBUSAMI JOY SACHIDANADAM, John, Paul, Stoughton, MA 02072 (US)
(74) Representative: Schwabe - Sandmair - Marx
(86) International application number: PCT/US2007/017016
(87) International publication number: WO 2008/016563

(56) References cited:
- DE-U1- 29 709 959
- DE-U1- 29 819 150
- US-A1- 2003 029 209
- US-A1- 2005 011 921

## Description

### BACKGROUND OF THE INVENTION

The present invention relates to mounting assemblies for temporarily stowing locks, for example, bicycle U-locks and cable locks, when not in use, and for releasing the locks for ready use when needed. More particularly, the present invention relates to mounting arrangements which facilitate adjustment in the position of the lock relative to the bicycle.

Since the invention of bicycle U-locks and cable locks, a variety of holders have been proposed for removably carrying such a lock when the bicycle is in use, rather than parked. Such a U-lock typically comprises a semi-enclosure member or shackle having legs or fittings with configured feet, a straight crossbar having openings for reception of these feet, and a locking mechanism in the crossbar for retaining or releasing these feet. Such a cable lock typically comprises a cable having at one end a leg or fitting with a configured foot, a bar extending from the other end of the cable and having an opening for reception of this foot, and a locking mechanism in the bar for retaining or releasing this foot. For protection against theft, this tie lock assemblage ties a strut or the like of the bicycle to a post, rail or other station.

The objectives of a holder for such locks are to carry the a lock securely on the bicycle frame without rattling, to position the lock inconspicuously on the bicycle frame without hindering movement of the cyclist, and yet to facilitate convenient release of the lock from the holder whenever needed. Prior art holders have not completely met these objectives. Prior art bicycle locks are disclosed in US-A-20030029209 and DE-29709959 U.

### SUMMARY OF THE INVENTION

The present invention provides in one aspect a lock mounting arrangement comprising a lock and a mounting member secured to a portion of the lock such that the mounting member is rotatable relative to the portion of the lock. At least two position delineators are provided on one of the mounting member and the lock and an engagement member is provided on the other of the mounting member and the lock. The engagement member is movable between a first position in which the engagement member engages at least one of the position delineators and thereby fixes the rotative position of the mounting member relative to the portion of the lock, and a second position in which the engagement member is lockingly disengaged from the position delineators such that the mounting member is free to rotate relative to the portion of the lock.

Document DE 297 09 959 U1 discloses a bicycle lock comprising a lock body which is rotatably located within a cylinder. The lock body can be arrested in two positions relative to the cylinder such that the lock can be used for locking the bicycle or as a baggage carrier. Other aspects of the invention are shown in the accompanying drawing figures and described in the following detailed description of the invention.

### BRIEF DESCRIPTION OF THE DRAWINGS

FIG. 1 shows a cable lock incorporating a mounting arrangement in accordance with the invention, the cable lock being mounted on the bicycle.
FIG. 2 shows the bicycle of FIG. 1 parked and secured by the cable lock of FIG. 1.
FIG. 3 is a top perspective view of an exemplary bracket in accordance with the lock mounting arrangement of the present invention.
FIG. 4 is a side plan view of a portion of a cable lock incorporating a mounting arrangement that is a first embodiment of the invention.
FIG. 5 is an isometric view showing the mounting member of the cable lock of FIG. 4.
FIG. 6 is a top plan view of the cable lock of FIG. 4.
FIG. 7 is a bottom plan view of the cable lock of FIG. 4.
FIG. 8 is an end elevation view of the cable lock of FIG. 4.
FIG. 9 is an exploded isometric view of the lock housing and mounting member of the cable lock of FIG. 4.
FIG. 10 shows the mounting member of FIG. 9, in partial section, assembled on the lock housing.
FIG. 11 is an isometric view of the mounting arrangement of FIG. 4 with the mounting member shown transparently.
FIG. 12 is an expanded view of the mounting arrangement illustrated in FIG. 11, illustrating the engagement member in an engaged position.
FIG. 13 is similar to FIG. 12 and shows the engagement member in a disengaged position.
FIG. 14 is similar to FIG. 13 and illustrates rotative adjustment of the mounting member relative to the lock housing with the engagement member in a disengaged position.
FIG. 15 is a side plan view of a portion of a cable lock incorporating a mounting arrangement that is an alternate embodiment of the invention.
FIG. 16 is front elevation view of the cable lock of FIG. 15.
FIG. 17 is rear elevation view of the cable lock of FIG. 15.
FIG. 18 is a top plan view of the cable lock of FIG. 15.
FIG. 19 is a bottom plan view of the cable lock of FIG. 15.
FIG. 20 is an exploded isometric view of the lock housing and mounting member of the cable lock of FIG. 15.
FIG. 21 is a cross sectional view of the mounting arrangement of FIG. 15 with the engagement member in an engaged position.
FIG. 22 is a cross sectional view of the mounting arrangement of FIG. 15 with the engagement member in a disengaged position.
FIG. 23 is an isometric view of the mounting arrangement of FIG. 15 illustrating rotative adjustment of the mounting member relative to the lock housing.
FIGS. 24 and 25 are isometric views of the mounting arrangement of FIG. 15 in partial section and illustrating the movement of the adjusting member during adjustment.
FIG. 26 is an elevation view of a U-lock incorporating a mounting arrangement that is an alternate embodiment of the invention.
FIG. 27 is an exploded elevation view of the mounting arrangement of the U-lock of FIG. 26.
FIG. 28 is an elevation view of a U-lock incorporating a mounting arrangement that is an another alternate embodiment of the invention.

### DETAILED DESCRIPTION OF THE INVENTION

Although the invention is illustrated and described herein with reference to specific embodiments, the invention is not intended to be limited to the details shown. Rather, various modifications may be made in the details within the scope and range of equivalents of the claims and without departing from the invention.

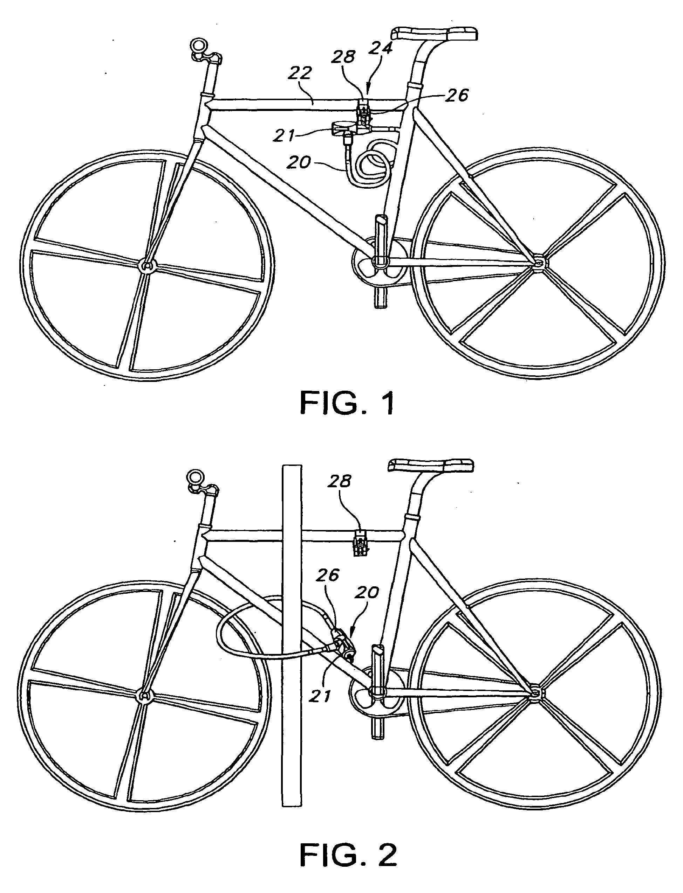

FIGS. 1 and 2 show a cable lock 20 held on a strut 22 of a bicycle frame by an mounting arrangement 24, which comprises a mounting member 26 secured to the lock body 21 and a bracket 28 which is securely connected to the strut 22 of the bicycle frame. As described in more detail hereinafter, the mounting arrangement 24 allows the rotative position of the mount member 26 relative to the lock body 21 to be adjusted such that the lock 20 can be unobtrusively stowed on the bicycle frame as shown in FIG. 1. With disengagement, the lock 20 is readily available for tying the bicycle to a secure post or other station as shown in FIG. 2.

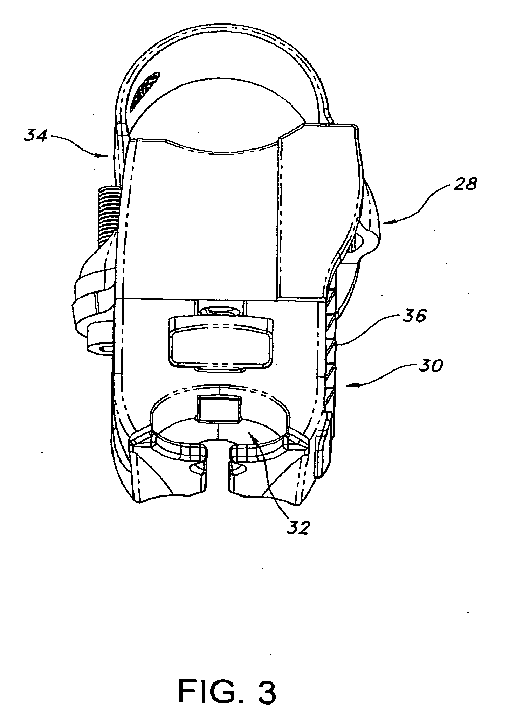

Referring to FIG. 3, an exemplary bracket 28 is illustrated. The exemplary bracket 28 is substantially as described in U.S. Patent No. 6,422,442 . The bracket 28 includes a mount portion 30 and an attachment portion 34.

The attachment portion 34 in the exemplary bracket 28 includes a strap 36 which is positioned about a bicycle frame member and tightened. While the exemplary bracket 28 includes a strap as an attachment means, the invention is not limited to such. The bracket 28 may have any of a number of attachment means, for example, but not limited to, the various attachment means illustrated in U.S. Patent No. 5,647,520 .

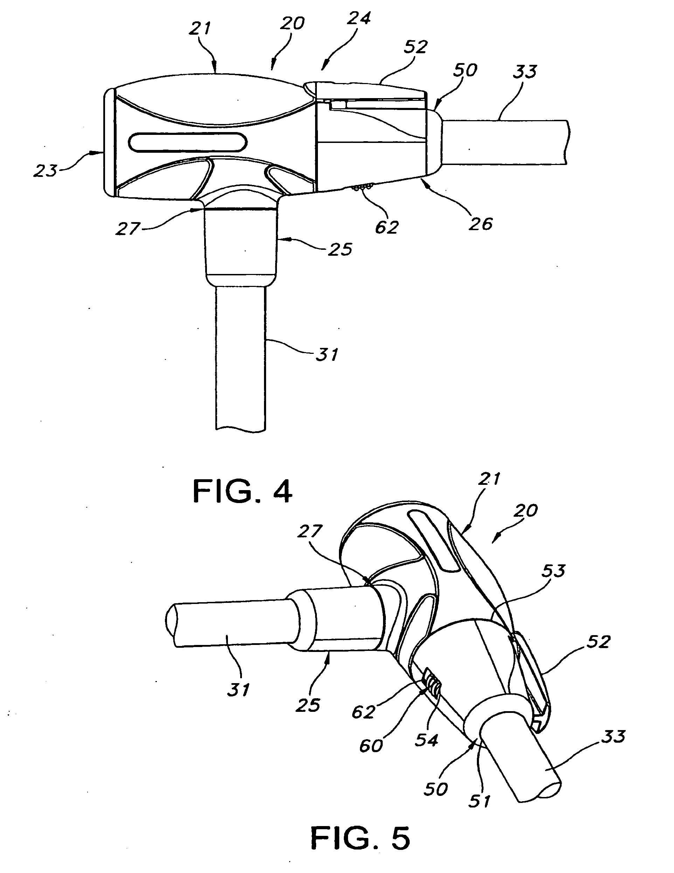

The mount portion 30 includes a channel 32 or the like which is configured to receive a complementary tongue portion 52 of the mounting member 26 (see FIG. 4). Engagement of the tongue portion 52 in the channel 32 secures the lock 20 to the bracket 28. While the illustrated tongue portion 52 and channel 32 are tapered, the invention is not limited to such. The complementary mating members can have any configuration, for example, a rectangular tongue and a corresponding channel. Furthermore, the complementary mating members may be reversed, i.e., the tongue portion may be provided on the bracket with the channel being defined on the mounting member. Various other configurations of mating members may be utilized without departing from the invention.

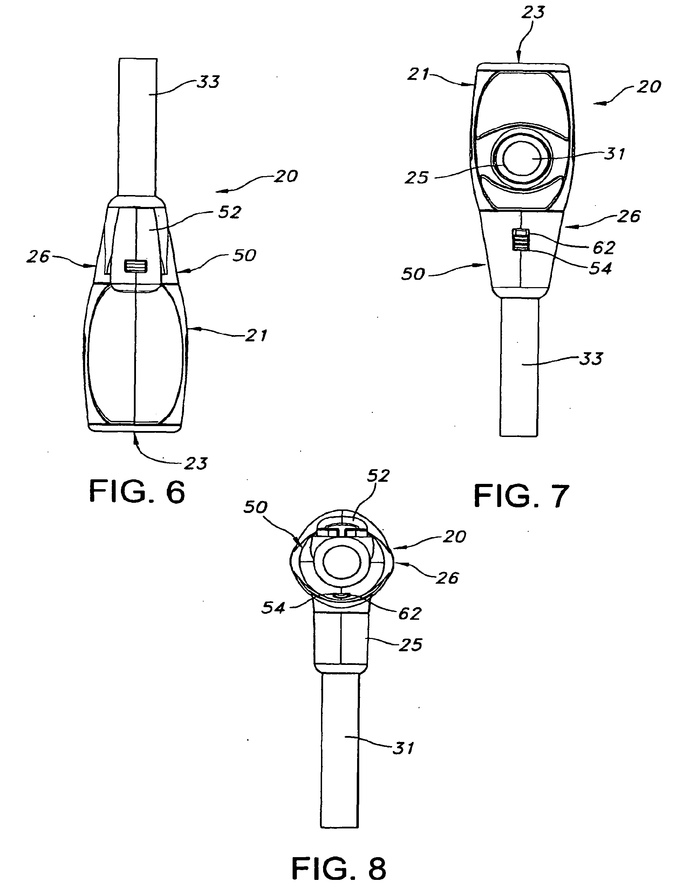

Referring to FIGS. 4-14, a cable lock 20 incorporating a mounting arrangement 24 that is first embodiment of the present invention will be described. The mounting arrangement 24 includes a mounting member 26 rotatably secured to an end of the lock body 21. In the present embodiment, the lock body 21 includes a key face 23 opposite the mounting member 26 and a cable head receiving opening 27 approximately midway along the body 21. Such a configuration is not required and the lock body 21 may be otherwise configured, for example, the key opening may be provided midway along the body 21 with the cable head receiving opening 27 opposite the mounting member 26. Other configurations may also be utilized. A lock cylinder (not shown) is positioned in the lock body 21 to lockingly engage a head (not shown) forward the shank 25 attached to end 31 of the cable. A keyway (not shown) or the like is provided on key face 23 to selectively lock and unlock the lock cylinder.

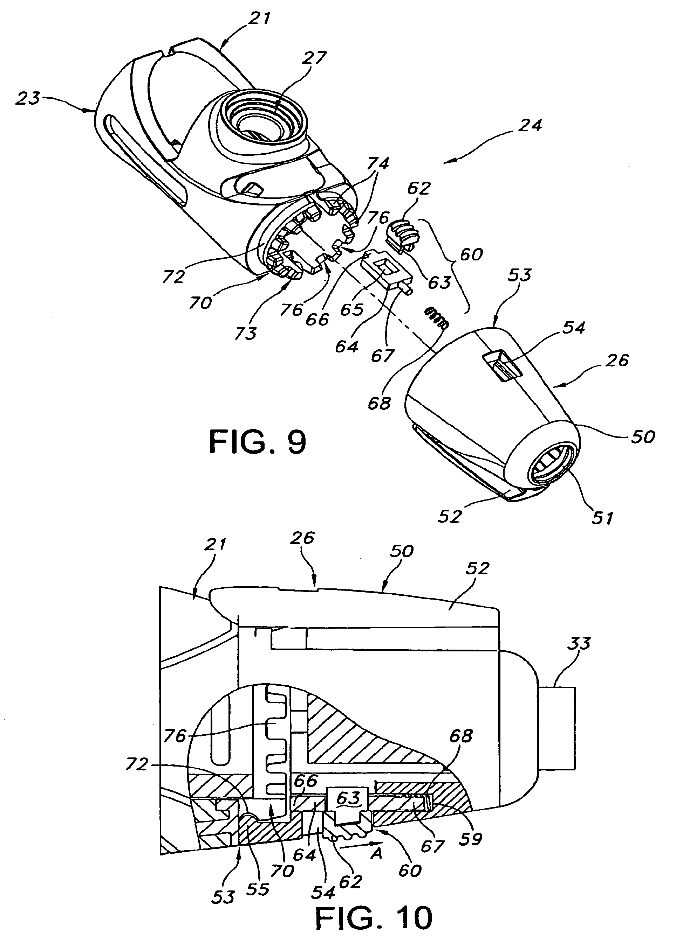

Referring to FIGS. 9-14, the mounting member 26 has a cylindrical body 50 having a generally open end 53 and a reduced open end 51. The body 50 does not have to be cylindrical, but may have other configurations. The reduced open end 51 is configured to receive the opposite end 33 of the cable which passes through the mounting member 26 and is secured within the lock body 21. The generally open end 53 has an internal annular protrusion 55 configured to snap fit into an annular recess 72 provided along an end projection 70 extending from the lock body 21. The annular protrusion 55 may be continuous or segmented and may have various configurations. Engagement of the protrusion 55 in the recess 72 secures the mounting member 26 to the lock body 21. Sufficient clearance is provided between the protrusion 55 and the recess 72 such that the mounting member 26 is rotatable relative to the lock body 21.

To set the position of the mounting member 26 relative to the lock body 21, the lock body 21 includes a plurality of position delineators 73 and the mounting member 26 includes an engagement member 60. While the present embodiment includes the position delineators 73 on the lock body 21 and the engagement member 60 on the mounting member 26, the invention is not limited to such. Alternatively, position delineators may provided on or within the mounting member 26 and the engagement member 60 may be provided on the lock body 21, or a combination thereof.

In the present embodiment, the position delineators 73 are defined by a series of alternating teeth 74 and openings 76 defined by the end projection 70 extending from the lock body 21. The delineators may have other structures including, but not limited to, projections, recesses, splines, or the like. For example, the end projection 70 extending from the lock body 21 may be provided with external splines while the inside surface of the mounting member 26 is provided with complementary splines. The mounting member 26 would be axially movable relative to the locking body 21 to engage and disengage the splines.

In the present embodiment, the engagement member 60 includes a sliding block 64 with an engagement pin 66 extending from one end thereof. The opposite end of the sliding block 64 includes a spring post 67 which supports a spring 68 or other biasing member. The spring post 67 and spring 68 are received in a recess 59 within the mounting member 26 such that the spring 68 biases the sliding block 64, and thereby the engagement pin 66, toward the locking body 21. The engagement pin 66 engages one of the openings 76 between the teeth 74 and thereby locks the rotative position of the mounting member 26 relative to the locking body 21.

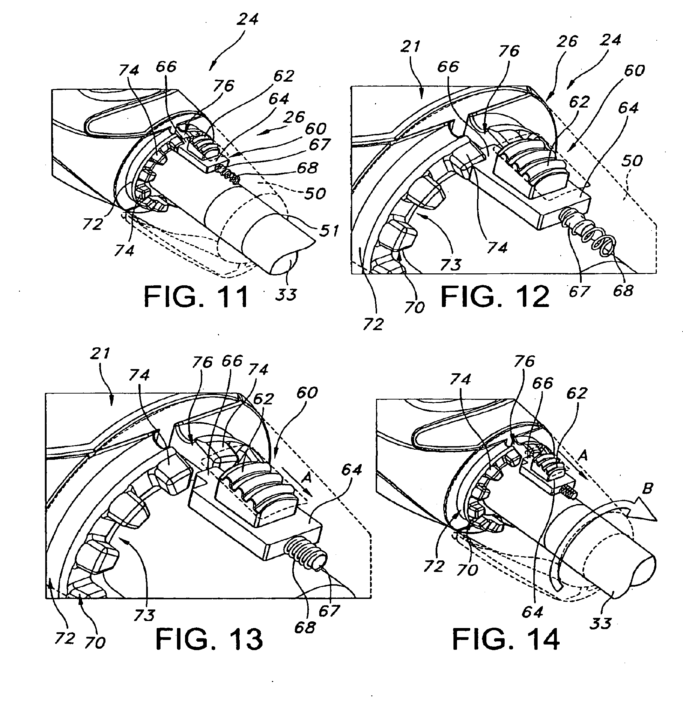

To adjust the position of the mounting member 26 relative to the lock body 21, for example, to facilitate a more comfortable position of the lock 20 on the bicycle, the engagement member 60 includes a push pad 62 which extends through an opening 54 in the mounting member body 50. In the present embodiment, the push pad 62 includes feet 63 which snap fit into an aperture 65 in the sliding block 64. Referring to FIG. 14, to adjust the position of the mounting member 26, the push pad 62 is pushed away from the lock body 21 against the force of the spring 68, as indicated by arrow A, until the engagement pin 66 disengages from the opening 76. The mounting member 26 can then be rotated relative to the lock body 21 as indicated by arrow B. Once a desired position is reached, the push pad 62 is released and the spring 66 biases the sliding block 64 until the engagement pin 66 engages one of the openings 76. The teeth 74 defining the openings 76 may be provided with tapered surfaces or the like to encourage the pin 66 into one of the openings 76.

The mounting arrangement 24 allows a user to easily fine tune the position of the lock 20 on the bicycle in a secure, reliable manner without the need for any tools.

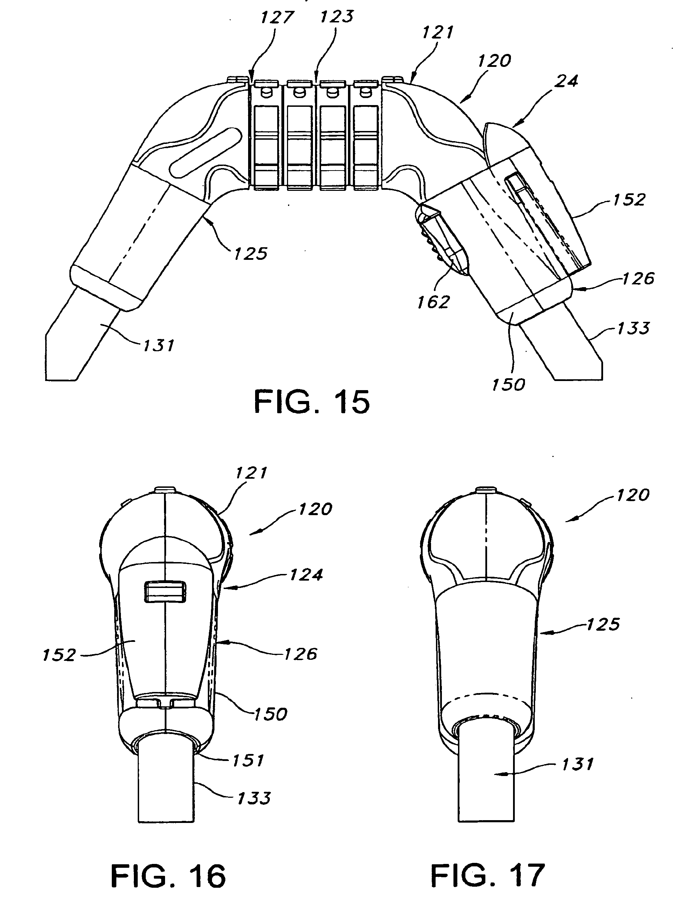

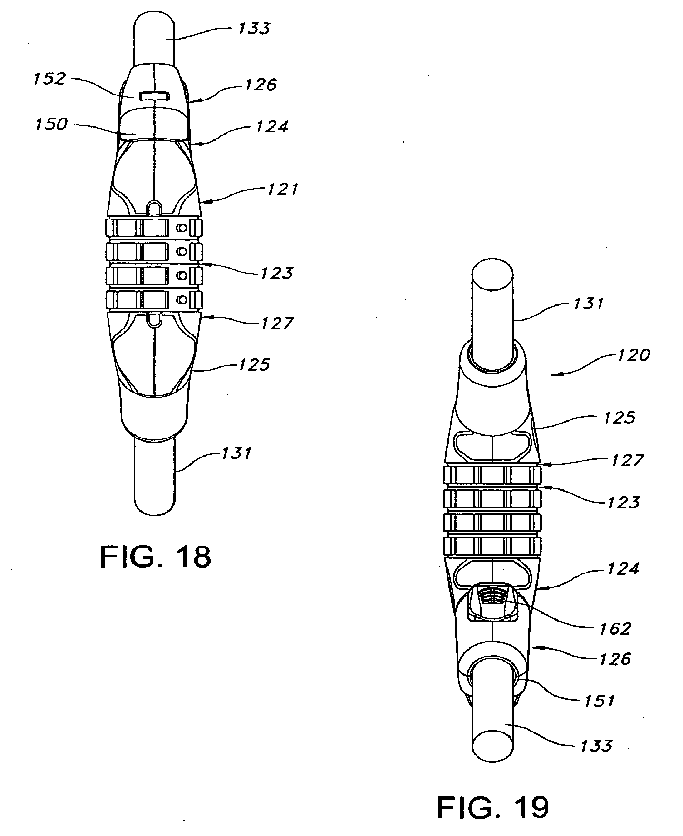

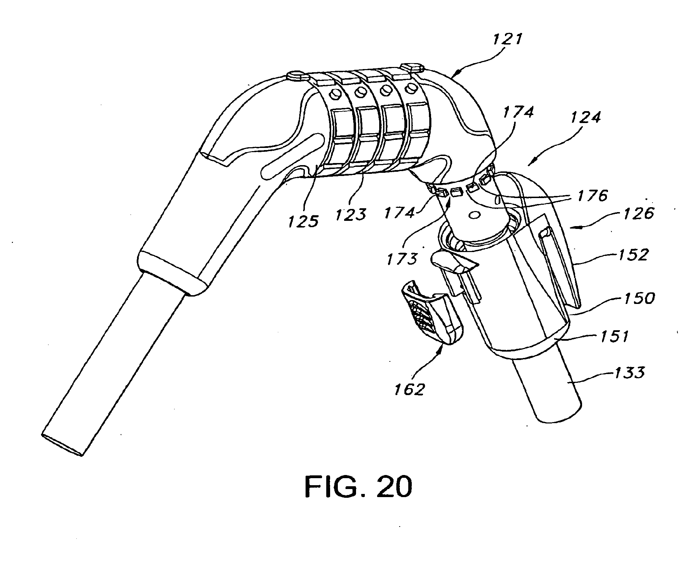

Referring to FIGS. 15-25, a cable lock 120 incorporating a mounting arrangement 124 that is an alternate embodiment of the present invention will be described. The mounting arrangement 124 includes a mounting member 126 rotatably secured to an end of the lock body 121. In the present embodiment, the lock body 121 includes a combination lock assembly 123 therealong and a cable head receiving opening 127 opposite the mounting member 126. Such a configuration is not required and the lock body 121 may be otherwise configured. The combination lock assembly lockingly engages a head (not shown) forward the shank 125 attached to end 131 of the cable. Referring to FIGS. 20-25, the mounting member 126 has a cylindrical body 150 having a generally open end 153 and a reduced open end 151. The body 150 does not have to be cylindrical, but may have other configurations. The reduced open end 151 is configured to receive the opposite end 133 of the cable which passes through the mounting member 126 and is secured within the lock body 121. The generally open end 153 has an internal annular protrusion configured to snap fit over radial projections 174 provided along an end projection 170 extending from the lock body 121. Engagement of the protrusion against the projections 174 secures the mounting member 126 to the lock body 121. Sufficient clearance is provided between the protrusion and the projections 174 such that the mounting member 126 is rotatable relative to the lock body 121.

To set the position of the mounting member 126 relative to the lock body 121, the lock body 121 includes a plurality of position delineators 173 and the mounting member 126 includes an engagement member 160. While the present embodiment includes the position delineators 173 on the lock body 121 and the engagement member 160 on the mounting member 126, the invention is not limited to such. Alternatively, position delineators may provided on or within the mounting member 126 and the engagement member 160 may be provided on the lock body 121, or a combination thereof.

In the present embodiment, the position delineators 173 are defined by the radial projections 174 and the openings 176 therebetween defined about the end projection 170 extending from the lock body 121. The delineators may have other structures including, but not limited to, projections, recesses, splines, or the like. For example, the end projection 170 extending from the lock body 121 may include a plurality of detents and the mounting member 126 may include a complementary inward projection configured to engage within a desired detent.

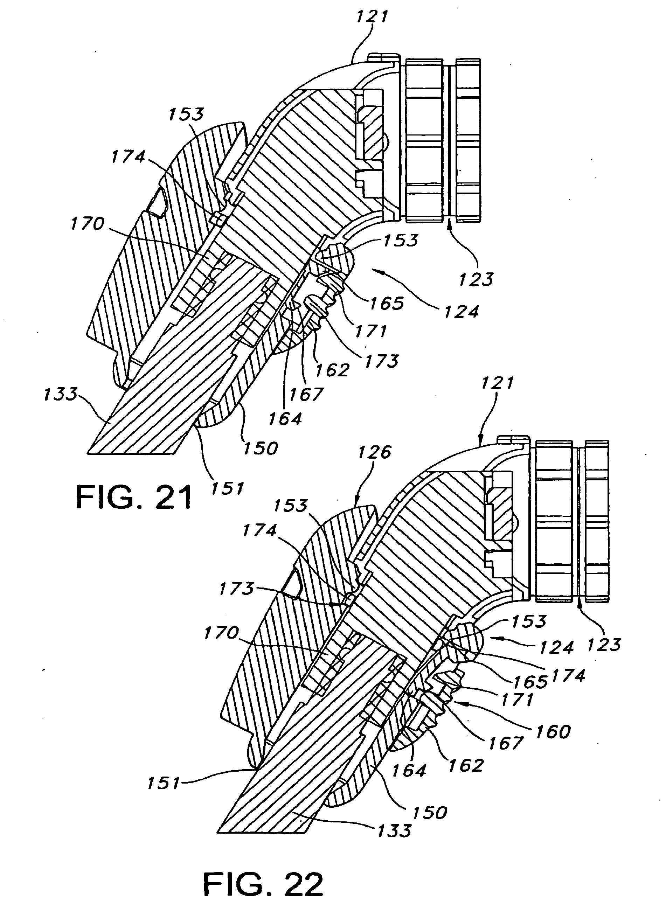

In the present embodiment, the engagement member 160 includes a flexible finger 164 formed integrally with the mounting member body 150 within an opening 154 through the body 150. (see FIG. 21). The flexible finger 164 is configured to be biased radially inward toward the delineators 173 defined on the end projection 170 extending from the lock body 121. As such, the flexible finger 164 positions itself within one of the openings 176 defined between the radial projections 174 and thereby locks the rotative position of the mounting member 126 relative to the locking body 121.

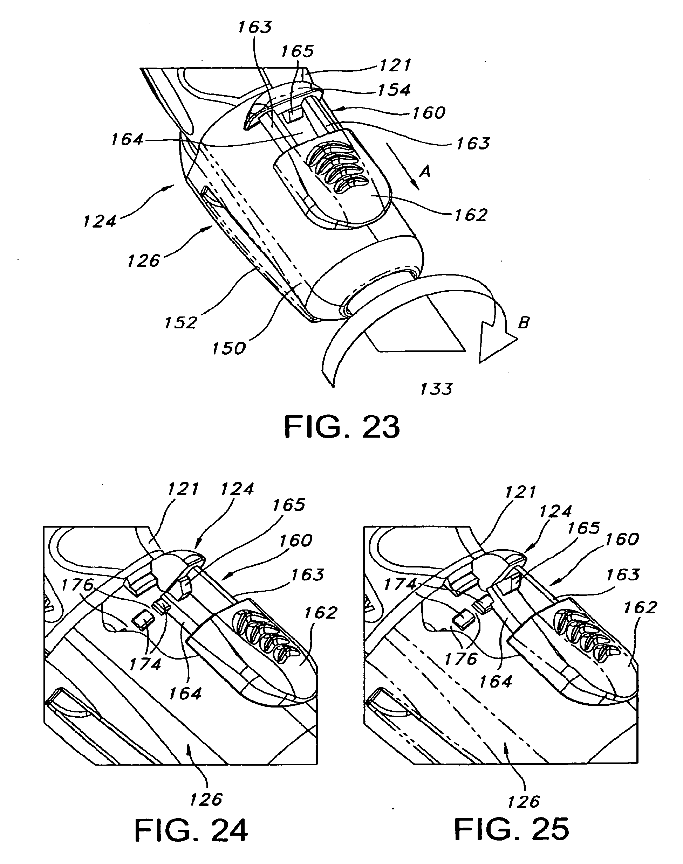

To ensure the flexible finger 164 does not inadvertently disengage, the engagement member 160 further comprises an engagement pad 162 which moves along guides 163 extending outwardly from the mounting member body 150 as shown in Fig. 23. The engagement pad 162 is moveable between a locked position shown in FIG. 21 and an unlocked position shown in FIG. 22. A first radially outwardly extending contact 167 engages a corresponding first radially inwardly extending contact 173 on the engagement pad 162. To move the engagement pad 162 to the unlock position, the first radially inwardly extending contact 173 is snapped past the first radially outwardly extending contact 167. In the locked position, a second radially inwardly extending contact 171 on the engagement pad 162 is positioned above and engages a second radially outwardly extending contact 165 on the flexible finger 164, and thereby prevents the flexible finger 164 from inadvertently disengaging from the position delineators 173.

To adjust the position of the mounting member 126 relative to the lock body 121, the engagement pad 162 is slid away from the lock body 121, as indicated by arrow A in FIG. 23, with the first radially inwardly extending contact 173 snapping past the first radially outwardly extending contact 167. As the engagement pad 162 is slid, the second radially inwardly extending contact 171 disengages from the second radially outwardly extending contact 165, such that the flexible finger 164 is free to flex outward, see FIG. 25, as the mounting member 126 is rotated relative to the lock body 121 as indicated by arrow B in FIG. 23. The flexible finger 164 sliding past the radial projections 174 provides a ratcheting effect. Once a desired position is reached, the engagement pad 162 is slid back to the locked position, with the second radially inwardly extending contact 171 engaging the second radially outwardly extending contact 165 to maintain such in place. As in the previous embodiment, the mounting arrangement 124 allows a user to easily fine tune the position of the lock 120 on the bicycle in a secure, reliable manner without the need for any tools.

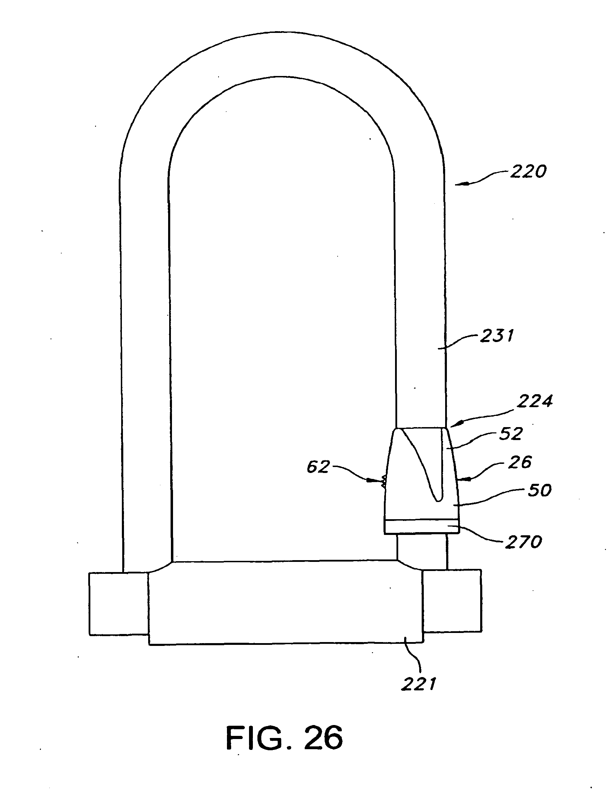

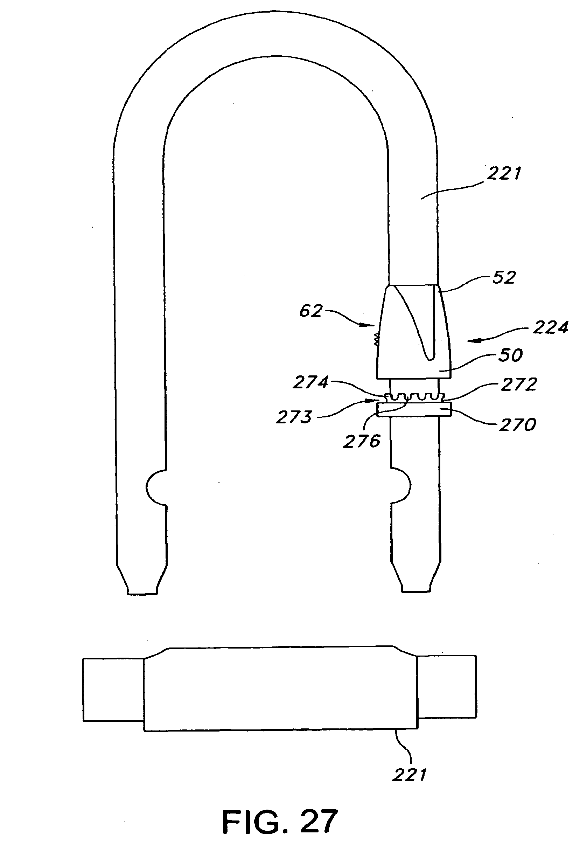

Referring to FIGS. 26 and 27, a U-lock 220 incorporating a mounting arrangement 224 that is another alternate embodiment of the present invention will be described. The mounting arrangement 224 includes a mounting member 26 which is substantially the same as in the first embodiment and like elements are numbered alike. While the mounting member 26 of the present embodiment is similar to the first embodiment, the mounting member 26 may have other configurations, including but not limited to the configuration of the mounting member 126. The mounting member 26 is rotatably secured to a collar 270 affixed to the shackle 231 of the U-lock 220. The collar 270 may be affixed in various manners including, but not limited to, a set screw, welding or the like. The shackle 231 is configured for locking engagement with a crossbar 221 as is known in the art.

Referring to FIG. 27, the collar 270 of the present embodiment is similar to the projecting end 70 of the first embodiment. The collar 270 includes an annular recess 272 configured to receive the annular protrusion 55 (not shown in FIG. 27) on the mounting member 26. Engagement of the protrusion 55 in the recess 272 secures the mounting member 26 to the collar 270 and thereby the shackle 231. Other means for connecting the mounting member 26 to the collar 270 may also be utilized. Sufficient clearance is provided between the protrusion 55 and the recess 272 such that the mounting member 26 is rotatable relative to the collar 270 and shackle 231. The collar 270 includes position delineators 273 defined by a series of alternating teeth 274 and openings 276 or any other configuration. The mounting member 26 may be adjusted relative to the collar 270 in the same manner as discussed above with respect to the first embodiment.

As in the previous embodiments, the mounting arrangement 224 allows a user to easily fine tune the position of the lock 220 on the bicycle in a secure, reliable manner without the need for any tools.

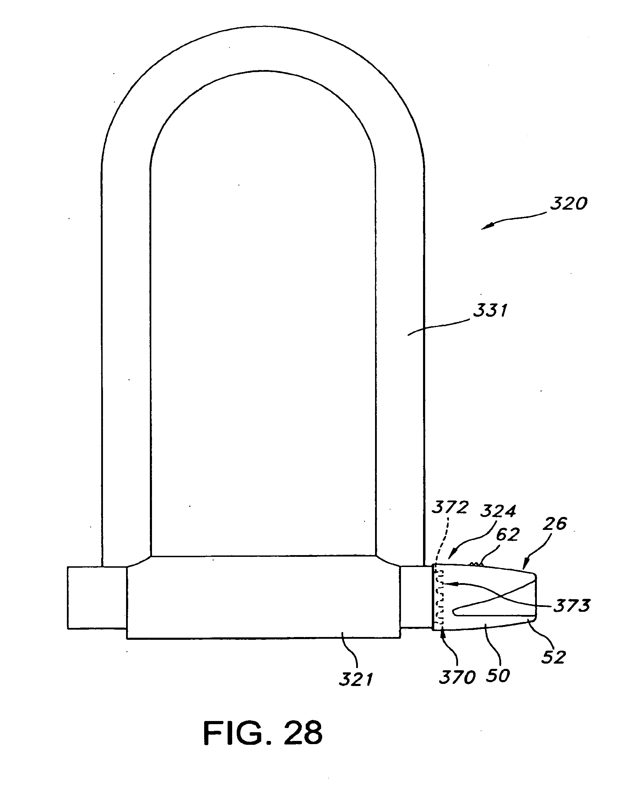

Referring to FIG. 28, a U-lock 320 incorporating a mounting arrangement 324 that is another alternate embodiment of the present invention will be described. The mounting arrangement 324 includes a mounting member 26 which is substantially the same as in the first embodiment and like elements are numbered alike. While the mounting member 26 of the present embodiment is similar to the first embodiment, the mounting member 26 may have other configurations, including but not limited to the configuration of the mounting member 126. The mounting member 26 is rotatably secured to an end 370 of the crossbar 321 of the U-lock 320. A shackle 331 is configured for locking engagement with the crossbar 321 as is known in the art.

The end 370 of the crossbar 321 includes an annular recess 372 (shown in phantom) configured to receive the annular protrusion 55 (not shown in FIG. 28) on the mounting member 26. Engagement of the protrusion 55 in the recess 372 secures the mounting member 26 to the end 370 of the crossbar 321. Other means for connecting the mounting member 26 to the collar 270 may also be utilized. Sufficient clearance is provided between the protrusion 55 and the recess 372 such that the mounting member 26 is rotatable relative to the crossbar 321. The crossbar 321 includes position delineators 373 defined by a series of alternating teeth and openings or any other configuration. The mounting member 26 may be adjusted relative to the crossbar 321 in the same manner as discussed above with respect to the first embodiment.

As in the previous embodiment, the mounting arrangement 324 allows a user to easily fine tune the position of the lock 320 on the bicycle in a secure, reliable manner without the need for any tools.

While preferred embodiments of the invention have been shown and described herein, it will be understood that such embodiments are provided by way of example only. Numerous variations, changes and substitutions will occur to those skilled in the art without departing from the invention. Accordingly, it is intended that the appended claims cover all such variations as fall within the scope of the invention.

## Claims

1. A lock mounting arrangement (24, 124, 224, 324) comprising:
a lock (20, 120, 220, 320);
a bracket (28) adapted to be secured to an object;
a mounting member (26, 126) secured to a portion (21, 121, 221, 321) of the lock such that the mounting member is rotatable relative to the portion of the lock, the mounting member configured to releasably mate with the bracket such that the lock and mounting member can be removed from the bracket for use;
at least two position delineators (73, 173, 273, 373) provided on one of the mounting member and the lock; and
an engagement member (60, 160) provided on the other of the mounting member and the lock and movable between a first position in which the engagement member engages at least one of the position delineators and thereby fixes the rotative position of the mounting member relative to the portion of the lock and a second position in which the engagement member is lockingly disengaged from the position delineators such that the mounting member is free to rotate relative to the portion of the lock.

2. The lock mounting arrangement (24, 124) of claim 1 wherein the lock (20,120) is a cable lock including a lock body (21, 121) and a cable (33, 133).

3. The lock mounting arrangement (24, 124) of claim 2 wherein the portion of the lock is provided on the lock body (21, 121).

4. The lock mounting arrangement (24, 124) of claim 3 wherein the lock body (21, 121) includes an annular recess (72, 172) configured to receive an inward projection (55, 155) on the mounting member to secure the mounting member to the lock body.

5. The lock mounting arrangement (24, 124) of claim 3 wherein the lock body includes a plurality of spaced apart radial projections (74, 174) which define the position delineators.

6. The lock mounting arrangement (24, 124) of claim 5 wherein an inward projection (55, 155) on the mounting member (26, 126) snap fits over the radial projections (74, 174) to secure the mounting member to the lock body.

7. The lock mounting arrangement (224, 324) of claim 1 wherein the lock (220, 320) is a U-lock including a shackle (231, 331) and a crossbar (221, 321).

8. The lock mounting arrangement (224, 324) of claim 7 wherein the portion of the lock is provided on the crossbar (221, 321).

9. The lock mounting arrangement (224, 324) of claim 7 wherein the crossbar (221, 321) includes an annular recess (272, 372) configured to receive an inward projection (55, 155) on the mounting member to secure the mounting member to the lock body.

10. The lock mounting arrangement (224, 324) of claim 7 wherein the portion of the lock is provided on the shackle (231, 331).

11. The lock mounting arrangement (224) of claim 10 wherein a collar (270) is positioned on the shackle (231) and the mounting member is secured to the collar.

12. The lock mounting arrangement (224) of claim 11 wherein the collar (270) defines one of the position delineators or the engagement member.

13. The lock mounting arrangement (224) of claim 11 wherein the collar (270) includes an annular recess (272) configured to receive an inward projection (55, 155) on the mounting member to secure the mounting member to the lock body.

14. The lock mounting arrangement (24, 124, 224, 324) of claim 1 wherein the lock is a keyed lock.

15. The lock mounting arrangement (24, 124, 224, 324) of claim 1 wherein the lock is a combination lock.

16. The lock mounting arrangement (24, 124, 224, 324) of claim 1 wherein the position delineators (73, 173, 273, 373) are provided on the lock and the engagement member (60, 160) is provided on the mounting member.

17. The lock mounting arrangement of claim 1 wherein the position delineators are provided on the mounting member and the engagement member is provided on the lock.

18. The lock mounting arrangement (24, 124, 224, 324) of claim 1 wherein the position delineators (73, 173, 273, 373) are defined by a plurality of spaced apart projections.

19. The lock mounting arrangement of claim 1 wherein the position delineators are defined by a plurality of detents.

20. The lock mounting arrangement of claim 1 wherein the position delineators are defined by a plurality of splines.

21. The lock mounting arrangement (24, 224, 324) of claim 1 wherein the engagement member (60) includes a slide block (64) with an engagement pin (66) configured to selectively engage the position delineators (73, 273, 373).

22. The lock mounting arrangement (24, 224, 324) of claim 21 wherein the slide block (64) is biased toward the first position wherein the engagement pin (66) is in engagement with at least one of the position delineators (73, 273, 373).

23. The lock mounting arrangement (24, 224, 324) of claim 21 wherein the slide block (64) includes an accessible thumb pad (62) to facilitate movement of the slide block from the first position to the second position.

24. The lock mounting arrangement (24, 224, 324) of claim 23 wherein the thumb pad (62) is accessible through an opening (54) in the mounting member (26).

25. The lock mounting arrangement (124) of claim 1 wherein the engagement member (160) includes a flexible finger (164) biased toward engagement with at least one of the position delineators (173).

26. The lock mounting arrangement (124) of claim 25 further comprising an engagement pad (162) slidable relative to the flexible finger (164) between an adjustment position in which the engagement pad is clear of the flexible finger such that the flexible finger is free to flex to a disengaged position during rotation of the mounting member (160) relative to the lock portion (121); and a fixed position wherein the engagement pad (162) engages the flexible finger (164) and prevents flexing thereof such that the flexible finger remains engaged with at least one position delineator (173) and the mounting member (126) is rotatably fixed relative to the lock portion.

27. The lock mounting arrangement (124) of claim 25 wherein the flexible finger (164) is formed integrally with the mounting member.

28. The lock mounting arrangement (24, 124, 224, 324) of claim 1 wherein the bracket and the mounting member (26, 126) have corresponding mating members.

29. The lock mounting arrangement of claim 28 wherein the bracket includes a female mating member and the mounting member includes a male mating member.

30. The lock mounting arrangement of claim 28 wherein the bracket includes a male mating member and the mounting member includes a female mating member.

31. A lock mounting arrangement (24, 124, 224, 324) comprising:
a lock (20, 120, 220, 320);
a bracket (28) adapted to be secured to an object;
a mounting member (26, 126) secured to a portion (21, 121, 221, 321) of the lock such that the mounting member is rotatable relative to the portion of the lock, the mounting member configured to releasably mate with the bracket such that the lock and mounting member can be removed from the bracket for use;
at least two position delineators (73, 173, 273, 373) provided on the lock; and
an engagement member (60,160) provided on the mounting member and movable between a first position in which the engagement member engages at least one of the position delineators and thereby fixes the rotative position of the mounting member relative to the portion of the lock and a second position in which the engagement member is lockingly disengaged from the position delineators such that the mounting member is free to rotate relative to the portion of the lock.

## Patentansprüche

1. Schlossbefestigungsanordnung (24, 124, 224, 324), die Folgendes aufweist:
ein Schloss (20, 120, 220, 320),
eine Halterung (28), die so hergerichtet ist, dass sie an einem Objekt gesichert werden kann,
ein Befestigungsglied (26, 126), das an einem Teil (21, 121, 221, 321) des Schlosses so gesichert ist, dass das Befestigungsglied relativ zu dem Teil des Schlosses drehbeweglich ist, wobei das Befestigungsglied dazu aufgebaut ist, mit der Halterung lösbar verbindbar zu sein, so dass das Schloss und das Befestigungsglied von der Halterung abgenommen werden können, um zum Einsatz zu kommen,
wenigstens zwei Positionseingrenzer (73, 173, 273, 373), die an einem aus dem Befestigungsglied und dem Schloss bereitgestellt sind, und
ein Eingriffsglied (60, 160), das an dem anderen aus dem Befestigungsglied und dem Schloss bereitgestellt ist und zwischen einer ersten Position, in der das Eingriffsglied wenigstens in einen der Positionseingrenzer eingreift und dadurch die Drehposition des Befestigungsglieds relativ zu dem Teil des Schlosses festlegt, und einer zweiten Position, in der das Eingriffsglied verriegelt von den Positionseingrenzern gelöst ist, so dass das Befestigungsglied sich frei relativ zu dem Teil des Schlosses drehen kann, bewegbar ist.

2. Schlossbefestigungsanordnung (24, 124) nach Anspruch 1, wobei das Schloss (20, 120) ein Kabelschloss mit einem Schlosskörper (21, 121) und einem Kabel (33, 133) ist.

3. Schlossbefestigungsanordnung (24, 124) nach Anspruch 2, wobei der Teil des Schlosses an dem Schlosskörper (21, 121) bereitgestellt ist.

4. Schlossbefestigungsanordnung (24, 124) nach Anspruch 3, wobei der Schlosskörper (21, 121) eine ringförmige Kerbe (72, 172) umfasst, die so ausgebildet ist, dass sie eine nach innen vorstehende Auskragung (55, 155) an dem Befestigungsglied aufnehmen kann, um das Befestigungsglied am Schlosskörper zu sichern.

5. Schlossbefestigungsanordnung (24, 124) nach Anspruch 3, wobei der Schlosskörper eine Vielzahl von beabstandeten radialen Erhebungen (74, 174) umfasst, die die Positionseingrenzer definieren.

6. Schlossbefestigungsanordnung (24, 124) nach Anspruch 5, wobei eine nach innen gerichtete Erhebung (55, 155) an dem Befestigungsglied (26, 126) mit den radialen Erhebungen (74, 174) eine Schnappverbindung eingeht, um das Befestigungsglied am Schlosskörper zu sichern.

7. Schlossbefestigungsanordnung (224, 324) nach Anspruch 1, wobei das Schloss (220, 320) ein U-förmiges Schloss mit einem Bügel (231, 331) und einem Querriegel (221, 321) ist.

8. Schlossbefestigungsanordnung (224, 324) nach Anspruch 7, wobei der Teil des Schlosses an dem Querriegel (221, 321) bereitgestellt wird.

9. Schlossbefestigungsanordnung (224, 324) nach Anspruch 7, wobei der Querriegel (221, 321) eine ringförmige Kerbe (272, 372) umfasst, die so ausgebildet ist, dass sie eine nach innen gerichtete Erhebung (55, 155) an dem Befestigungsglied aufnehmen kann, um das Befestigungsglied am Schlosskörper zu sichern.

10. Schlossbefestigungsanordnung (224, 324) nach Anspruch 7, wobei der Teil des Schlosses am Bügel (231, 331) bereitgestellt wird.

11. Schlossbefestigungsanordnung (224) nach Anspruch 10, wobei ein Kragen (270) an dem Bügel (231) positioniert ist und das Befestigungsglied an dem Kragen gesichert ist.

12. Schlossbefestigungsanordnung (224) nach Anspruch 11, wobei der Kragen (270) eines aus den Positionseingrenzern und dem Eingriffsglied definiert.

13. Schlossbefestigungsanordnung (224) nach Anspruch 11, wobei der Kragen (270) eine ringförmige Kerbe (272) umfasst, die so ausgebildet ist, dass sie eine nach innen gerichtete Erhebung (55, 155) an dem Befestigungsglied aufnehmen kann, um das Befestigungsglied am Schlosskörper zu sichern.

14. Schlossbefestigungsanordnung (24, 124, 224, 324) nach Anspruch 1, wobei das Schloss ein Schloss mit Schlüssel ist.

15. Schlossbefestigungsanordnung (24, 124, 224, 324) nach Anspruch 1, wobei das Schloss ein Kombinationsschloss ist.

16. Schlossbefestigungsanordnung (24, 124, 224, 324) nach Anspruch 1, wobei die Positionseingrenzer (73, 173, 273, 373) an dem Schloss bereitgestellt sind und das Eingriffsglied (60, 160) an dem Befestigungsglied bereitgestellt ist.

17. Schlossbefestigungsanordnung nach Anspruch 1, wobei die Positionseingrenzer an dem Befestigungsglied bereitgestellt sind und das Eingriffsglied an dem Schloss bereitgestellt ist.

18. Schlossbefestigungsanordnung (24, 124, 224, 324) nach Anspruch 1, wobei die Positionseingrenzer (73, 173, 273, 373) durch eine Vielzahl von beabstandeten Erhebungen definiert sind.

19. Schlossbefestigungsanordnung nach Anspruch 1, wobei die Positionseingrenzer durch eine Vielzahl von Sperrkegeln definiert sind.

20. Schlossbefestigungsanordnung nach Anspruch 1, wobei die Positionseingrenzer durch eine Vielzahl von Keilen definiert sind.

21. Schlossbefestigungsanordnung (24, 224, 324) nach Anspruch 1, wobei das Eingriffsglied (60) einen Verschiebeklotz bzw. -block (64) mit einem Eingriffspin (66) umfasst, der so ausgebildet ist, dass er wahlweise in die Positionseingrenzer (73, 273, 373) eingreifen kann.

22. Schlossbefestigungsanordnung (24, 224, 324) nach Anspruch 21, wobei der Verschiebeklotz (64) in Richtung der ersten Position vorgespannt ist, und wobei der Eingriffspin (66) mit wenigstens einem der Positionseingrenzer (73, 273, 373) im Eingriff ist.

23. Schlossbefestigungsanordnung (24, 224, 324) nach Anspruch 21, wobei der Verschiebeblock (64) eine zugängliche Daumenauflage (62) umfasst, um eine Bewegung des Verschiebeblocks aus der ersten Position in die zweite Position zu erleichtern.

24. Schlossbefestigungsanordnung (24, 224, 324) nach Anspruch 23, wobei die Daumenauflage (62) durch eine Öffnung (54) im Befestigungsglied (26) zugänglich ist.

25. Schlossbefestigungsanordnung (124) nach Anspruch 1, wobei das Eingriffsglied (160) einen flexiblen Finger (164) umfasst, der in Richtung eines Eingriffs mit wenigstens einem der Positionseingrenzer (173) vorgespannt ist.

26. Schlossbefestigungsanordnung (124) nach Anspruch 25, die zusätzlich eine Eingriffsauflage (162) aufweist, die relativ zu dem flexiblen Finger (164) zwischen einer Justierungsposition, in der die Eingriffsauflage einen lichten Abstand vom flexiblen Finger aufweist, so dass während einer Drehung des Befestigungsglieds (160) relativ zu dem Schlossteil (121) der flexible Finger in eine gelöste Position frei biegbar ist, und einer festen Position verschiebbar ist, in der die Eingriffsauflage (162) in den flexiblen Finger (164) eingreift und ein Verbiegen des Fingers verhindert, so dass der flexible Finger mit wenigstens einem Positionseingrenzer (173) im Eingriff bleibt und das Bewegungsglied (126) relativ zu dem Schlossteil drehsteif ist.

27. Schlossbefestigungsanordnung (124) nach Anspruch 25, wobei der flexible Finger (164) einstückig mit dem Befestigungsglied gebildet ist.

28. Schlossbefestigungsanordnung (24, 124, 224, 324) nach Anspruch 1, wobei die Halterung und das Befestigungsglied (26, 126) korrespondierende Verbindungsglieder haben.

29. Schlossbefestigungsanordnung nach Anspruch 28, wobei die Halterung ein Buchsenverbindungsglied und das Befestigungsglied ein Steckverbindungsglied umfasst.

30. Schlossbefestigungsanordnung nach Anspruch 28, wobei die Halterung ein Steckverbindungsglied und das Befestigungsglied ein Buchsenverbindungsglied umfasst.

31. Schlossbefestigungsanordnung (24, 124, 224, 324), die Folgendes aufweist:
ein Schloss (20, 120, 220, 320),
eine Halterung (28), die so hergerichtet ist, dass sie an einem Objekt gesichert werden kann,
ein Befestigungsglied (26, 126), das an einem Teil (21, 121, 221, 321) des Schlosses so gesichert ist, dass das Befestigungsglied relativ zu dem Teil des Schlosses drehbeweglich ist, wobei das Befestigungsglied dazu aufgebaut ist, mit der Halterung lösbar verbindbar zu sein, so dass das Schloss und das Befestigungsglied von der Halterung abgenommen werden können, um zum Einsatz zu kommen,
wenigstens zwei Positionseingrenzer (73, 173, 273, 373), die an dem Schloss bereitgestellt sind, und
ein Eingriffsglied (60, 160), das an dem Befestigungsglied bereitgestellt ist und zwischen einer ersten Position, in der das Eingriffsglied wenigstens in einen der Positionseingrenzer eingreift und dadurch die Drehposition des Befestigungsglieds relativ zu dem Teil des Schlosses festlegt, und einer zweiten Position, in der das Eingriffsglied verriegelt von den Positionseingrenzern gelöst ist, so dass das Befestigungsglied sich frei relativ zu dem Teil des Schlosses drehen kann, bewegbar ist.

## Revendications

1. Système de montage de verrou (24, 124, 224, 324) comprenant :
un verrou (20, 120, 220, 320) ;
une attache (28) adaptée pour être fixée à un objet ;
un élément de montage (26, 126) fixé à une portion (21, 121, 221, 321) du verrou de sorte que l'élément de montage est apte à tourner par rapport à la portion du verrou, l'élément de montage étant configuré pour s'accoupler de façon amovible à l'attache de sorte que le verrou et l'élément de montage peuvent être retirés de l'attache en vue de l'utilisation ;
au moins deux détrompeurs de position (73, 173, 273, 373) prévus sur l'un parmi l'élément de montage et le verrou ; et
un élément d'engagement (60, 160) prévu sur l'autre parmi l'élément de montage et le verrou et apte à se déplacer entre une première position dans laquelle l'élément d'engagement s'engage dans au moins un des détrompeurs de position et fixe ainsi la position en rotation de l'élément de montage par rapport à la portion du verrou et une seconde position dans laquelle l'élément d'engagement est désengagé, quant au blocage, des détrompeurs de position de sorte que l'élément de montage est libre de tourner par rapport à la portion du verrou.

2. Système de montage de verrou (24, 124) selon la revendication 1, dans lequel le verrou (20, 120) est un verrou à câble incluant un corps de verrou (21, 121) et un câble (33, 133).

3. Système de montage de verrou (24, 124) selon la revendication 2, dans lequel la portion du verrou est prévue sur le corps de verrou (21, 121).

4. Système de montage de verrou (24, 124) selon la revendication 3, dans lequel le corps de verrou (21, 121) inclut un évidement annulaire (72, 172) configuré pour recevoir une saillie intérieure (55, 155) sur l'élément de montage pour fixer l'élément de montage au corps de verrou.

5. Système de montage de verrou (24, 124) selon la revendication 3, dans lequel le corps de verrou inclut une pluralité de saillies radiales espacées (74, 174) qui définissent les détrompeurs de position.

6. Système de montage de verrou (24, 124) selon la revendication 5, dans lequel une saillie intérieure (55, 155) sur l'élément de montage (26, 126) s'adapte par encliquetage sur les saillies radiales (74 174) pour fixer l'élément de montage au corps de verrou.

7. Système de montage de verrou (224, 324) selon la revendication 1, dans lequel le verrou (220, 320) est un verrou en U incluant une manille (231, 331) et une barre transversale (221, 321).

8. Système de montage de verrou (224, 324) selon la revendication 7, dans lequel la portion du verrou est prévue sur la barre transversale (221, 321).

9. Système de montage de verrou (224, 324) selon la revendication 7, dans lequel la barre transversale (221, 321) inclut un évidement annulaire (272, 372) configuré pour recevoir une saillie intérieure (55, 155) sur l'élément de montage pour fixer l'élément de montage au corps de verrou.

10. Système de montage de verrou (224, 324) selon la revendication 7, dans lequel la portion du verrou est prévue sur la manille (231, 331).

11. Système de montage de verrou (224) selon la revendication 10, dans lequel un collier (270) est positionné sur la manille (231) et l'élément de montage est fixé au collier.

12. Système de montage de verrou (224) selon la revendication 11, dans lequel le collier (270) définit un des détrompeurs de position ou l'élément d'engagement.

13. Système de montage de verrou (224) selon la revendication 11, dans lequel le collier (270) inclut un évidement annuaire (272) configuré pour recevoir une saillie intérieure (55, 155) sur l'élément de montage pour fixer l'élément de montage au corps de verrou.

14. Système de montage de verrou (24, 124, 224, 324) selon la revendication 1, dans lequel le verrou est un verrou à clé.

15. Système de montage de verrou (24, 124, 224, 324) selon la revendication 1, dans lequel le verrou est un verrou à combinaison.

16. Système de montage de verrou (24, 124, 224, 324) selon la revendication 1, dans lequel les détrompeurs de position (73, 173, 273, 373) sont prévus sur le verrou et l'élément d'engagement (60, 160) est prévu sur l'élément de montage.

17. Système de montage de verrou selon la revendication 1, dans lequel les détrompeurs de position sont prévus sur l'élément de montage et l'élément d'engagement est prévu sur le verrou.

18. Système de montage de verrou (24, 124, 224, 324) selon la revendication 1, dans lequel les détrompeurs de position (73, 173, 273, 373) sont définis par une pluralité de saillies espacées.

19. Système de montage de verrou selon la revendication 1, dans lequel les détrompeurs de position sont définis par une pluralité d'éléments d'arrêt.

20. Système de montage de verrou selon la revendication 1, dans lequel les détrompeurs de position sont définis par une pluralité de cannelures.

21. Système de montage de verrou (24, 224, 324) selon la revendication 1, dans lequel l'élément d'engagement (60) inclut un bloc coulissant (64) doté d'une tige d'engagement (66) configurée pour s'engager sélectivement avec les détrompeurs de position (73, 273, 373).

22. Système de montage de verrou (24, 224, 324) selon la revendication 21, dans lequel le bloc coulissant (64) est poussé en direction de la première position dans laquelle la tige d'engagement (66) est en engagement avec au moins un des détrompeurs de position (73, 273, 373).

23. Système de montage de verrou (24, 224, 324) selon la revendication 21, dans lequel le bloc coulissant (64) inclut un poussoir accessible (62) pour faciliter le mouvement du bloc coulissant de la première position dans la seconde position.

24. Système de montage de verrou (24, 224, 324) selon la revendication 23, dans lequel le poussoir (62) est accessible par une ouverture (54) ménagée dans l'élément de montage (26).

25. Système de montage de verrou (124) selon la revendication 1, dans lequel l'élément d'engagement (160) inclut un doigt flexible (164) poussé dans le sens de l'engagement avec au moins un des détrompeurs de position (173).

26. Système de montage de verrou (124) selon la revendication 25, comprenant en outre un poussoir d'engagement (162) apte à coulisser par rapport au doigt flexible (164) entre une position de réglage dans laquelle le poussoir d'engagement est libéré du doigt flexible de sorte que le doigt flexible est libre de fléchir vers une position désengagée pendant la rotation de l'élément de montage (160) par rapport à la portion de verrou (121) ; et une position fixe dans laquelle le poussoir d'engagement (162) s'engage avec le doigt flexible (164) et l'empêche de fléchir de sorte que le doigt flexible reste engagé avec au moins un détrompeur de position (173) et l'élément de montage (126) est fixé en rotation par rapport à la portion de verrou.

27. Système de montage de verrou (124) selon la revendication 25, dans lequel le doigt flexible (164) est formé solidairement de l'élément de montage.

28. Système de montage de verrou (24, 124, 224, 324) selon la revendication 1, dans lequel l'attache et l'élément de montage (26, 126) possèdent des éléments d'accouplement correspondants.

29. Système de montage de verrou selon la revendication 28, dans lequel l'attache inclut un élément d'accouplement femelle et l'élément de montage inclut un élément d'accouplement mâle.

30. Système de montage de verrou selon la revendication 28, dans lequel l'attache inclut un élément d'accouplement mâle et l'élément de montage inclut un élément d'accouplement femelle.

31. Système de montage de verrou (24, 124, 224, 324) comprenant :
un verrou (20, 120, 220, 320) ;
une attache (28) adaptée pour être fixée à un objet ;
un élément de montage (26, 126) fixé à une portion (21, 121, 221, 321) du verrou de sorte que l'élément de montage est apte à tourner par rapport à la portion du verrou, l'élément de montage étant configuré pour s'accoupler de façon amovible à l'attache de sorte que le verrou et l'élément de montage peuvent être retirés de l'attache en vue de l'utilisation ;
au moins deux détrompeurs de position (73, 173, 273, 373) prévus sur le verrou ; et
un élément d'engagement (60, 160) prévu sur l'élément de montage et apte à se déplacer entre une première position dans laquelle l'élément d'engagement s'engage dans au moins un des détrompeurs de position et fixe ainsi la position en rotation de l'élément de montage par rapport à la portion du verrou et une seconde position dans laquelle l'élément d'engagement est désengagé, quant au blocage, des détrompeurs de position de sorte que l'élément de montage est libre de tourner par rapport à la portion du verrou.
